# FASCICULE DE BREVET EUROPEEN

(11) **EP 4 167 260 B1**
(45) Date de publication et mention de la délivrance du brevet: **04.09.2024**
(21) Numéro de dépôt: 22187163.5
(22) Date de dépôt: 27.07.2022
(51) Int. Cl.: H01H 9/34

(54) **APPAREIL ÉLECTRIQUE COMPRENANT DES DISPOSITIFS DE FILTRAGE DE GAZ DE COUPURE**
ELEKTRISCHES GERÄT MIT FILTERVORRICHTUNGEN FÜR TRENNGAS
ELECTRICAL APPLIANCE COMPRISING DEVICES FOR FILTERING SWITCHING GAS

(30) Priorité: 12.10.2021 FR 2110798
(43) Date de publication de la demande: 19.04.2023
(73) Titulaire: Schneider Electric Industries SAS, 92500 Rueil-Malmaison (FR)
(72) Inventeur: DOMENECH, Cyril, 38120 PROVEYSIEUX (FR); Goerger, Christophe, 38100 GRENOBLE (FR); ROTA, Daniel, 38450 VIF (FR)
(74) Mandataire: Lavoix

(56) Documents cités:
- EP-A1- 0 817 223
- EP-A1- 3 435 394
- EP-A1- 3 667 845
- WO-A1-2019/201446

## Description

La présente invention concerne un appareil électrique à coupure dans l'air pour interrompre un courant électrique, comprenant des dispositifs de filtrage de gaz de coupure.

On connaît des appareils électriques, tels que des disjoncteurs ou des contacteurs, qui permettent d'interrompre sélectivement la circulation d'un courant électrique au sein d'un circuit électrique, par exemple au sein d'un réseau de distribution électrique à usage domestique ou industriel.

Ces appareils de coupure comportent des contacts électriques séparables raccordés à des terminaux d'entrée et de sortie d'un courant électrique. Les contacts électriques sont sélectivement déplaçables entre une position fermée, dans laquelle la circulation du courant électrique entre les terminaux est autorisée et, alternativement, une position ouverte dans laquelle les contacts électriques sont séparés l'un de l'autre afin d'empêcher la circulation du courant électrique.

Lorsque les contacts électriques sont déplacés vers leur position ouverte alors qu'un courant électrique circule, il peut se former un arc électrique entre ces deux contacts électriques. L'arc électrique ionise l'air ambiant dans l'appareil, ce qui génère des gaz, dit gaz de coupure, qui sont ensuite rejetés vers l'extérieur de l'appareil. L'arc électrique est ensuite éteint au moyen d'une chambre de coupure d'arc placée dans l'appareil, afin d'interrompre la circulation du courant électrique.

Les gaz de coupure présentent une température élevée, typiquement supérieure à 4000°C et comprennent des particules telles que des suies qui proviennent généralement d'une fusion partielle de divers constituants internes de l'appareil sous l'action de l'arc électrique.

Le gaz de coupure doit donc être refroidi et déionisé, au moyen d'un dispositif de filtration dédié de l'appareil, avant d'être rejeté à l'extérieur. Cela permet notamment d'éviter un rebouclage du courant d'arc électrique à l'extérieur de l'appareil, par exemple entre les terminaux d'entrée et/ou de sortie et des pièces métalliques externes, par exemple au sein d'un tableau électrique, du fait de la conductivité électrique importante du gaz de coupure ionisé. Un tel rebouclage conduit à la formation d'un court-circuit, causant un défaut de sécurité inacceptable et dangereux. Le dispositif de filtration permet aussi de réduire la pression des gaz et évite donc de générer une surpression à l'extérieur de l'appareil lors du rejet des gaz, ce qui est important lorsque l'appareil est logé dans un enclos fermé.

Il existe des dispositifs de filtrage qui visent à refroidir les gaz de coupure avant leur sortie. Le brevet EP 3435394 B1 décrit des exemples de tels dispositifs de filtrage.

Bien que donnant satisfaction, de tels dispositifs de filtrage présentent toutefois un encombrement élevé, ainsi qu'un coût de fabrication qui peut être élevé.

Cela est notamment le cas dans les appareils de coupure électrique à double sortie, dans lesquels deux sorties de gaz sont ménagées à des emplacements opposés, et dans lesquels deux dispositifs de filtrage distincts sont associés à ces sorties de gaz.

C'est à ces inconvénients qu'entend plus particulièrement remédier l'invention, en proposant un appareil électrique de coupure d'un courant électrique à coupure dans l'air, ce dispositif de filtrage étant optimisé pour présenter un encombrement réduit et un coût de fabrication réduit, tout en conservant des performances de filtrages satisfaisantes.

À cet effet, l'invention concerne un appareil électrique de coupure à contacts séparables configuré pour interrompre un courant électrique, l'appareil électrique comportant une première chambre de coupure d'arc électrique associée à un premier dispositif de filtrage de gaz de coupure et une deuxième chambre de coupure d'arc électrique associée à un deuxième dispositif de filtrage de gaz de coupure, le premier dispositif de filtrage et le deuxième dispositif de filtrage étant disposés sur des faces opposées du boîtier de l'appareil électrique, dans lequel le premier dispositif de filtrage comporte une première pièce de support, un premier filtre à maille tressée métallique et un premier filtre poreux métallique, et dans lequel le deuxième dispositif de filtrage comporte une deuxième pièce de support, un deuxième filtre à maille tressée métallique et un deuxième filtre poreux métallique, dans lequel section d'entrée de gaz du premier dispositif de filtrage est inférieure à la section d'entrée de gaz du deuxième dispositif de filtrage, dans lequel le premier filtre poreux et le deuxième filtre poreux comportent chacun une mousse métallique, la porosité du deuxième filtre proche ou identique de la porosité du premier filtre de l'appareil, dans lequel le volume de mousse utilisé pour le deuxième filtre poreux est supérieure au volume de mousse utilisé pour le premier filtre poreux, et dans lequel le volume de mousse par filtre exprimé en cm3 par mégawatt de puissance est compris entre 0,3 et 0,5 pour le deuxième filtre poreux et entre 0,15 et 0,25 pour le premier filtre poreux.

Selon des aspects avantageux mais non obligatoires, un tel appareil de coupure peut incorporer une ou plusieurs des caractéristiques suivantes, prises isolément ou suivant toute combinaison techniquement admissible :
- le premier dispositif de filtrage et le deuxième dispositif de filtrage sont disposés différemment dans l'appareil, de façon non symétrique ;
- le premier dispositif de filtrage de l'appareil est placé sur une face inférieure du boîtier de l'appareil en étant décalé vers l'arrière du boîtier, et dans lequel que le deuxième dispositif de filtrage est placé sur une face supérieure du boîtier en étant décalé vers l'avant du boîtier ;

- le premier dispositif de filtrage occupe un volume inférieur au volume occupé par le deuxième dispositif de filtrage ;
- le premier dispositif de filtrage est placé dans un premier bloc de filtrage associé à la face inférieure du boîtier de l'appareil, et dans lequel le deuxième dispositif de filtrage est placé dans un deuxième bloc de filtrage associé à la face supérieure du boîtier de l'appareil, le premier bloc de filtrage et le deuxième bloc de filtrage présentant des dimensions différentes ;
- au moins un des filtres poreux, choisi parmi le premier filtre poreux et le deuxième filtre poreux, est réalisé par fabrication additive ;
- le au moins un filtre poreux fabriqué par fabrication additive est réalisé d'une seule pièce avec le filtre à maille tressée métallique correspondant ;
- le au moins un filtre poreux fabriqué par fabrication additive est réalisé d'une seule pièce avec le filtre à maille tressée métallique et avec la pièce de support correspondants ;
- le dispositif de filtrage comprend aussi des éléments de renfort, par exemple des nervures et/ou des piliers, qui sont ménagés à l'intérieur de la pièce de support et qui sont configurés pour rigidifier les filtres poreux et/ou les filtres à maille tressée métallique ;
- au moins une des pièces de support est réalisé par fabrication additive, la au moins une pièce support intégrant des éléments de fixation, qui sont configurés pour l'assemblage de cette pièce de support au reste de l'appareil électrique.

Selon un autre aspect, un tiroir amovible pour une armoire électrique comporte une armature et un appareil de coupure fixé sur l'armature, l'appareil de coupure étant tel que précédemment décrit.

L'invention sera mieux comprise et d'autres avantages de celle-ci apparaîtront plus clairement à la lumière de la description qui va suivre, d'un mode de réalisation d'un appareil de coupure à contacts séparables comprenant un dispositif de filtrage de gaz, ce mode de réalisation étant donné uniquement à titre d'exemple en référence aux dessins annexés, dans lesquels :
[Fig 1] la figure 1 représente schématiquement un appareil de coupure à contacts électriques séparables, selon une vue écorchée et partiellement éclatée ;
[Fig 2] la figure 2 représente une autre vue de l'appareil de la figure 1 ;
[Fig 3] la figure 3 représente schématiquement un autre mode de réalisation d'un appareil de coupure à contacts électriques séparables, similaire à l'appareil de la figure 1, selon une vue écorchée et partiellement éclatée ;
[Fig 4] la figure 4 représente une autre vue de l'appareil de la figure 3 ;
[Fig 5] la figure 5 représente une vue simplifiée d'un tiroir électrique amovible comportant l'appareil de la figure 1.

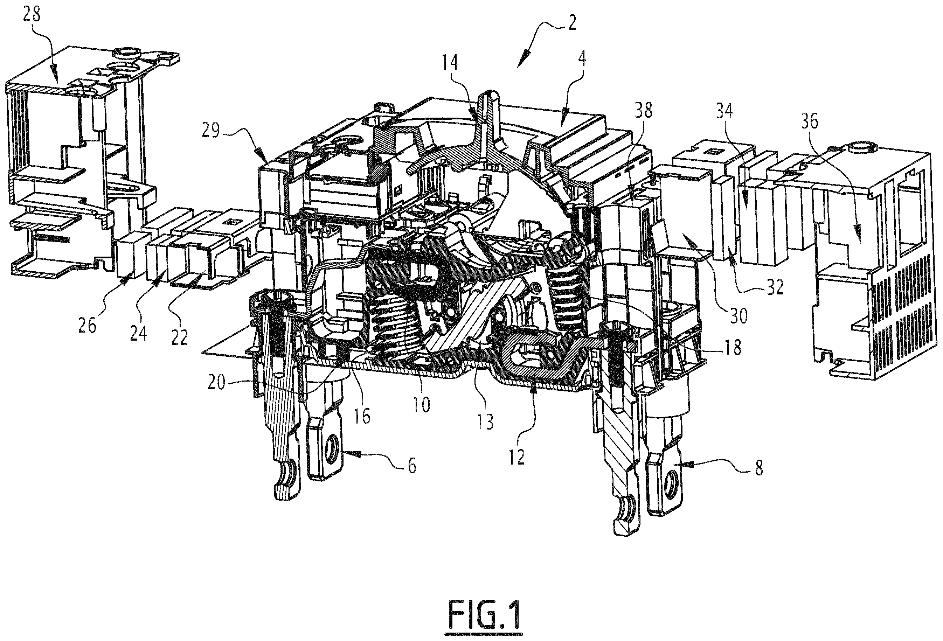

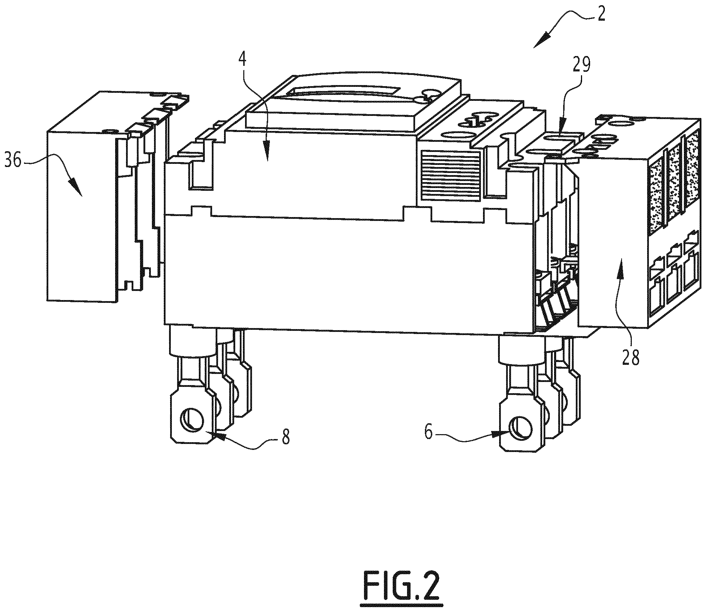

Les figures 1 et 2 représentent un premier mode de réalisation d'appareil de coupure 2 d'un courant électrique à contacts électriques séparables et à coupure dans l'air.

Dans cet exemple, l'appareil 2 est un disjoncteur multipolaire à basse tension et à haute intensité. Par exemple, l'appareil 2 est adapté pour fonctionner avec des tensions électriques inférieures ou égales à 1000 Volts AC et à 1500 Volts DC et avec des courants électriques de court-circuit d'intensité supérieure ou égale à 1 kA.

L'appareil 2 est ici adapté pour agir sur un courant triphasé et comporte à cet effet trois pôles distincts, chacun associé à une phase du courant électrique.

En variante, l'appareil 2 peut être différent. Il peut s'agir par exemple d'un contacteur ou d'un disjoncteur à courant continu. L'appareil peut aussi comporter un nombre de pôles différents, par exemple être un appareil monopolaire ou tétrapolaire.

L'appareil 2 est destiné à être connecté à un circuit électrique pour en assurer la protection contre des défauts électriques, tels qu'un court-circuit ou une surintensité.

L'appareil 2 comporte un boîtier 4, tel qu'un boîtier en plastique moulé.

Par exemple, le boîtier 4 présente une forme de pavé, ou une forme inscrite dans un pavé.

L'appareil 2 comporte des premiers terminaux de connexion (terminaux aval) 6, chacun associé à une phase du courant électrique. De même, l'appareil 2 comporte des deuxièmes terminaux de connexion (terminaux amont) 8.

Les terminaux de connexion amont et aval s'étendent ici en saillie par rapport à une face arrière du boîtier 4 de l'appareil 2, cette face arrière étant opposée à une face avant du boîtier de l'appareil 2. En variante, les terminaux de connexion pourraient être disposés différemment, par exemple en émergeant depuis d'autres faces et/ou suivant d'autres orientations.

Par exemple, les qualificatifs géométriques tels que « supérieur », « inférieur », « avant » et « arrière » sont utilisés pour désigner l'orientation de l'appareil 2 lorsque celui-ci est monté dans une position de fonctionnement, par exemple sur un tableau électrique ou dans une armoire électrique.

Comme illustré à la figure 1, l'appareil 2 comporte un bloc de coupure contenant des contacts électriques séparables.

Les contacts électriques séparables sont ici réalisés par l'association de contacts électriques fixes 10 et 12, ici solidaires d'une ampoule de coupure logée dans le boîtier 4 de l'appareil 2, et d'au moins un contact électrique mobile 13 déplaçable par rapport aux contacts fixes 10 et 12 entre un état ouvert et un état fermé.

Par exemple, les contacts électriques fixes et mobiles comportent chacun un élément électriquement conducteur, tel qu'un conducteur électrique en cuivre ou en tout autre matériau approprié.

Dans le cas présent, les contacts fixes 10 et 12 sont au nombre de deux pour chaque pôle de l'appareil (ou phase électrique), l'un des contacts fixes (le contact fixe 10) étant raccordé électriquement au terminal de connexion 6, l'autre contact fixe (le contact fixe 12) étant raccordé au terminal de connexion 8.

Le ou les contacts électriques mobiles associé à un même pôle de l'appareil 2 sont ici portés par une pièce rotative montée entre les contacts fixes 10 et 12 et couplée à un mécanisme de commutation de l'appareil 2. Dans l'exemple illustré, les contacts fixes 10 et 12 sont disposés de façon symétrique par rapport à l'axe de rotation de la pièce rotative portant les contacts électriques mobiles.

Le mécanisme de commutation peut être déclenché par un déclencheur (non illustré) et/ou par un organe de commande 14 manuellement actionnable par un utilisateur, tel qu'un levier de commande. L'organe de commande 14 est ici placé sur la face avant du boîtier 14. De tels mécanismes de commutation sont connus et ne sont pas décrits ici plus en détail.

L'appareil 2 peut comporter d'autres contacts électriques séparables associés aux autres phases électriques, ces contacts séparables étant cependant de préférence couplés mécaniquement aux contacts mobiles décrits ci-dessus (par exemple, les pièces rotatives respectives portant les contacts mobiles sont couplées mécaniquement pour tourner simultanément).

Dans l'état fermé, les contacts mobiles sont en contact électrique avec les contacts fixes 10 et 12 et autorisent ainsi la circulation d'un courant électrique au sein de l'appareil 2 entre les terminaux opposés 6 et 8.

Dans l'état ouvert, les contacts mobiles sont éloignés à distance des contacts fixes 10 et 12 pour empêcher la circulation d'un courant électrique, les contacts 10 et 12 étant ainsi isolés électriquement par l'air ambiant. Le courant électrique est ainsi empêché de circuler entre les terminaux opposés 6 et 8, du moins lorsqu'aucun arc électrique n'est présent.

De façon connue, lorsque deux contacts électriques 10 et 12 se séparent du fait de la rotation du contact mobile alors qu'un courant électrique circule au travers de l'appareil 2, il apparaît un arc électrique entre les contacts fixes 10, 12 et le contact mobile 13. L'arc électrique naît de la rupture d'isolement dans l'air entre les contacts fixes 10, 12 et le contact mobile 13. L'arc électrique est entretenu par ionisation de l'air ambiant. Il en résulte une augmentation de la température et de la pression, car l'arc électrique entraîne à son tour l'ionisation de l'air et la combustion de constituants de l'appareil 2, par exemple de pastilles de contact et/ou de parois du boîtier 4, ce qui donne naissance à un gaz de coupure. L'arc électrique s'accompagne ainsi d'une brusque élévation de la température et de la pression à l'intérieur de l'appareil 2.

Pour éteindre l'arc électrique, l'appareil 2 comporte des chambres de coupure d'arc 16 et 18, ici ménagées dans le bloc de coupure. Chaque chambre de coupure 16 et 18 est, dans cet exemple, associée à et placée en face d'une zone de contact entre un contact fixe 10, 12 et un contact mobile. Par exemple, la chambre de coupure 16 est placée du côté du contact fixe 10 (et donc du côté du terminal aval 6), et la chambre de coupure 18 est placée du côté du contact fixe 12 (et donc du côté du terminal amont 8).

Chaque chambre de coupure 16, 18 comporte un empilement de tôles métalliques, aussi nommées plaques de séparation d'arc, et un canal d'évacuation des gaz de coupure qui débouche à l'extérieur du boîtier 4 par une sortie d'échappement de gaz.

Sur la figure 1, le canal d'évacuation associé à la chambre de coupure 16 porte la référence 20.

Les plaques de l'empilement ont pour fonction d'éteindre l'arc électrique en le fractionnant en une pluralité d'arcs distincts entre les plaques. Le canal d'évacuation 20 a pour fonction d'évacuer le gaz de coupure hors du boîtier de l'appareil 2 vers la sortie de gaz correspondante. En pratique, les gaz de coupure issus des chambres de coupure 16, 18 ne peuvent ici s'échapper en dehors de l'appareil 2 que par l'intermédiaire du canal d'évacuation correspondant. Par exemple, le boîtier 4 est réalisé dans un matériau étanche aux gaz.

L'appareil 2 comporte également des dispositifs de filtrage qui ont pour fonction de refroidir et de dépolluer les gaz de coupure et pour réduire la pression des gaz de coupure avant leur évacuation hors de l'appareil 2. Chaque dispositif de filtrage est placé en sortie d'une chambre de coupure 16, 18.

Dans cet exemple, pour chaque pôle (ou phase), l'appareil 2 comporte deux dispositifs de filtrage, respectivement placés sur la sortie amont et la sortie aval de gaz de coupure de l'appareil 2, c'est-à-dire ici en sortie du canal d'évacuation correspondant, de manière à recueillir et filtrer les gaz de coupure issus de ce bloc de coupure.

L'appareil 2 comporte un premier dispositif de filtrage.

Comme visible sur la figure 1, le premier dispositif de filtrage comporte une pièce de support 22, un filtre à maille tressée métallique 24 et un filtre poreux métallique 26.

Le filtre à maille tressée 24 et un filtre poreux métallique 26 sont logés à l'intérieur de la pièce de support 22, qui est placée en sortie du canal d'évacuation 20.

Sur la figure 1, ces éléments sont illustrés dans une vue éclatée pour faciliter la compréhension. On comprend toutefois qu'en pratique, ces éléments sont assemblés entre eux pour former le dispositif de filtrage lorsque l'appareil 2 est dans une configuration de fonctionnement.

Comme cela est visible sur les figures 1 et 2, ces éléments font partie d'un premier bloc de filtrage, qui comporte une armature 28, ou structure de maintien, qui est configurée pour être accrochée sur la face supérieure 29 du boîtier 4 de l'appareil 2. La pièce de support 22 est elle-même placée dans l'armature 28.

L'armature 28 peut être configuré pour accueillir plusieurs dispositifs de filtrage de l'appareil 2, associés aux chambres de coupures aval respectives qui sont situées du côté des premiers contacts fixes 10 (donc du côté dit « aval ») pour les différents pôles de l'appareil 2. En d'autres termes, le premier bloc de filtrage est commun à toutes les sorties de gaz situées du côté aval. L'armature 28 est par exemple réalisée en plastique.

Autrement dit, le premier bloc de filtrage (et donc l'armature 28) peut contenir plusieurs dispositifs de filtrage analogues au premier dispositif de filtrage, ces dispositifs de filtrage étant associés aux orifices de sortie de gaz aval, qui ici débouchent sur la face inférieure du boîtier 4.

La pièce de support 22 sert à maintenir en position le filtre à maille tressée 24 et le filtre à mousse métallique 26 pour que ces derniers soient placés dans le chemin du gaz de coupure. La pièce de support 22 fait ainsi office d'enveloppe qui accueille et entoure le filtre à maille tressée 24 et le filtre poreux métallique 26.

La pièce de support 22 est ici réalisée en matière métallique, de préférence en acier nickelé. Le matériau métallique peut toutefois être différent, par exemple être de l'acier inoxydable.

Le filtre à maille tressée 24 a pour fonction de favoriser la répartition du flux de gaz de coupure entrant dans la pièce de support 22 sur toute la surface d'entrée du filtre 26, notamment pour éviter que le jet de gaz ne se concentre totalement sur une zone précise du filtre 26, ce qui pourrait l'endommager. De façon préférentielle, le filtre à maille tressée 24 comporte une couche, ou toile, de tissu métallique formé par tissage de fils métalliques. De préférence, ces fils métalliques sont de forte épaisseur, par exemple de diamètre supérieur à 1mm. Avantageusement, le tissu présente un maillage de type « reps ».

Le filtre 26 comporte une couche de mousse métallique poreuse, placée en sortie du filtre à maille tressée 24, par exemple en étant accolée à celui-ci et en recouvrant une face de sortie de celui-ci sur toute sa surface.

En variante, le filtre 26 peut comporter un empilement de plusieurs telles couches de mousse métallique accolées entre elles. De préférence, la ou les couches de mousse sont montées de façon étanche, pour éviter que le gaz de coupure provenant du diffuseur 24 ne puisse s'échapper au dehors du filtre à maille tressée 24 sans passer par le filtre 26.

Cette mousse métallique présente une porosité élevée, par exemple supérieure ou égale à 90% et, de préférence, supérieure ou égale à 95%. La porosité est ici définie comme étant le rapport entre, d'une part, le volume des évidements contenus à l'intérieur d'un volume de mousse et, d'autre part, le dit volume de mousse.

La mousse métallique présente une structure alvéolaire poreuse formée d'une matière métallique solide. De fait, elle présente une surface d'échange élevée, par exemple supérieure ou égale à 1500m² par mètre cube de mousse et, de préférence, supérieure ou égale à 2500m² par mètre cube ou, encore plus préférentiellement, supérieure ou égale à 2800m² par mètre cube. Les porosités de la mousse métallique débouchent à l'extérieur de la couche de mousse, par exemple au niveau de faces extérieures de cette couche. Ainsi, les gaz de coupure sortant du diffuseur peuvent entrer dans le filtre 26 et traverser celui-ci pour ensuite en ressortir à l'extérieur du dispositif de filtrage.

De préférence, la mousse métallique est réalisée en nickel. En variante, la mousse peut être réalisée en un alliage de nickel-chrome.

Plus généralement, les matériaux utilisés pour la partie filtrante des filtres - mousse ou treillis ou lattice -) sont préférentiellement des matériaux métalliques ayant une bonne résistance à la température. Ces matériaux métalliques incluent :
- le nickel pur ou ses alliages, en particulier les nuances connues sous le nom d'Inconel 718, Inconel 625, Inconel 600,
- le cobalt ou ses alliages, en particulier l'alliage CoCr28Mo6,
- le titane pur ou ses alliages, notamment la nuance référencée Ta6V,
- les aciers, notamment les aciers dits « à outils », les aciers à maturation de martensite dits « aciers maraging », notamment la nuance dite « 300M », et les aciers inoxydables, notamment les nuances types AISI 304, AISI316, 17-4PH ;
- le cuivre et ses alliages, notamment le laiton, le bronze, les alliages cupro-aluminium...)
- l'aluminium et ses alliages, notamment les nuances 6061, 6082, 7075.

Selon des modes de réalisation alternatifs, la mousse métallique pourrait être formée par fabrication additive de poudre métallique, aussi nommée impression 3D. Le filtre 26, voire l'ensemble formé par le filtre 26 et le filtre à maille tressée 24 et/ou la pièce d'entrée 22 pourraient être au moins en partie fabriqués par fabrication additive.

L'association de la pièce d'entrée 22, du filtre à maille tressée 24 et du filtre poreux 26 permet de refroidir le gaz de coupure en absorbant une quantité d'énergie importante de ce dernier, tout en limitant l'ablation de matière par le gaz de coupure.

L'appareil 2 comporte un deuxième dispositif de filtrage.

Le deuxième dispositif de filtrage, visible sur la figure 1, comporte une deuxième pièce de support 30, un deuxième filtre à maille tressée métallique 32 et un deuxième filtre poreux métallique 34.

Le filtre à maille tressée 32 et le filtre poreux métallique 34 sont logés à l'intérieur de la pièce de support 30, qui est placée en sortie du canal d'évacuation associé à la deuxième chambre de coupure 18.

Sur la figure 1, ces éléments sont illustrés dans une vue éclatée pour faciliter la compréhension. On comprend toutefois qu'en pratique, ces éléments sont assemblés entre eux pour former le dispositif de filtrage lorsque l'appareil 2 est dans une configuration de fonctionnement.

Comme cela est visible sur les figures 1 et 2, ces éléments font partie d'un deuxième bloc de filtrage, qui comporte une armature 36, ou structure de maintien, qui est ici configurée pour être accrochée sur la face supérieure 38 du boîtier 4 de l'appareil 2. La pièce de support 30 est elle-même placée dans l'armature 36. L'armature 36 est par exemple fabriquée en plastique.

Le deuxième bloc de filtrage (et donc l'armature 36) peut être configuré pour accueillir plusieurs dispositifs de filtrage de l'appareil 2, associés aux chambres de coupures respectives qui sont situées du côté des deuxièmes contacts fixes 12 (donc du côté dit « amont ») pour les différents pôles de l'appareil 2.

Autrement dit, le deuxième bloc de filtrage peut contenir plusieurs dispositifs de filtrage analogues au deuxième dispositif de filtrage, ces dispositifs de filtrage étant associés aux orifices de sortie de gaz amont, qui ici débouchent sur la face supérieure du boîtier 4.

La pièce de support 30, le filtre à maille tressée 32 et le filtre 34 ont des fonctions similaires à celles de la pièce de support 22, du filtre à maille tressée 24 et du filtre à mousse métallique 26, respectivement.

La pièce de support 30 est ici réalisée en matière métallique, de préférence en acier nickelé. Le matériau métallique peut toutefois être différent, par exemple être de l'acier inoxydable.

La deuxième pièce de support 30 présente avantageusement une forme et des dimensions différentes de celles de la première pièce de support 22.

Par exemple, la deuxième pièce de support 30 présente une forme évasée permettant d'augmenter la section du dispositif de filtrage.

De façon préférentielle, le filtre à maille tressée 32 comporte une couche, ou toile, de tissu métallique formé par tissage de fils métalliques. De préférence, ces fils métalliques sont de forte épaisseur, par exemple de diamètre supérieur à 1mm. Avantageusement, le tissu présente un maillage de type « reps ».

De préférence, la porosité du deuxième filtre à maille tressée 32 est différente de la porosité du premier filtre à maille tressée 24.

Le deuxième filtre 34 comporte une couche de mousse métallique poreuse, placée en sortie du deuxième filtre à maille tressée 32, par exemple en étant accolée à celui-ci et en recouvrant une face de sortie de celui-ci sur toute sa surface.

Cette mousse métallique présente une porosité élevée, par exemple supérieure ou égale à 90% et, de préférence, supérieure ou égale à 95%.

En pratique, la porosité du deuxième filtre poreux métallique 34 est proche ou identique à la porosité du premier filtre poreux métallique 26.

De manière schématique, la quantité de gaz de coupure émise lors d'une coupure de l'appareil électrique 2 est reliée à la puissance électrique passant par l'appareil 2 au moment de la coupure. En conséquence, la quantité maximale de gaz de coupure potentiellement émise par l'appareil 2 est une fonction de la puissance maximale admise par l'appareil 2, autrement dit une fonction du calibre de l'appareil 2. Dans l'exemple illustré, l'appareil 2 est configuré pour fonctionner sous une tension électrique égale 1500 Volts DC et avec des courants électriques de court-circuit d'intensité supérieure ou égale à 1 kA. Autrement dit ; l'appareil 2 admet ici une puissance électrique égale à 1,5 MW (méga Watt). Le volume de mousse métallique total de l'appareil 2, exprimé en cm³ - centimètre cube - et égal à la somme des volumes du deuxième filtre à mousse métallique 34 et du volume de mousse utilisée pour le premier filtre 26, est avantageusement choisi en fonction de la quantité maximale de gaz de coupure émise par l'appareil 2, c'est-à-dire en fonction de la puissance admise par l'appareil 2.

De préférence, le volume de chacune des mousses métalliques est ajusté en fonction de la quantité de gaz générée par chacune des chambres de coupure.

De préférence, le volume de mousse utilisée pour le deuxième filtre à mousse métallique 34 de l'appareil 2 est supérieure au volume de mousse utilisée pour le premier filtre 26 poreux métallique de l'appareil 2.

Notamment, la quantité de mousse utilisée pour le deuxième filtre 34 de l'appareil 2 est supérieure à la quantité de mousse utilisée pour le premier filtre 26 de l'appareil 2.

Avantageusement, pour une puissance électrique donnée admise par l'appareil 2, le volume de mousse pour chaque filtre poreux métallique 26 ou 34 est choisi en fonction du débit maximal de gaz admis par la sortie de gaz (ici donné par la section de sortie équivalente de l'ouverture ou du canal d'évacuation correspondant).

Par exemple, pour une section de sortie équivalente, le volume de mousse par filtre exprimé en cm³ par mégawatt de puissance est compris entre 0,3 et 0,5 pour le filtre poreux 34 (le filtre amont) et entre 0,15 et 0,25 pour le filtre poreux 26 (le filtre aval).

De préférence, les sections d'entrée respectives du premier dispositif de filtrage et du deuxième dispositif de filtrage de l'appareil 2 sont dimensionnées en fonction des sections des canaux d'évacuation amont et aval des gaz de coupure.

Par exemple, la section du canal d'évacuation aval 20 (celui associé à la première chambre de coupure 16) est inférieure à la section du canal d'évacuation amont (celui associé à la deuxième chambre de coupure 18). La section d'entrée du premier dispositif de filtrage est donc inférieure à la section d'entrée du deuxième dispositif de filtrage.

Par ailleurs, le premier dispositif de filtrage et le deuxième dispositif de filtrage sont disposés différemment dans l'appareil 2, de façon non symétrique.

Par exemple, comme illustré sur la figure 1, le canal d'évacuation aval 20 débouche sur une première ouverture (ouverture aval) située sur la face inférieure 29 et décalée vers l'arrière du boîtier 4 de l'appareil 2.

Le canal d'évacuation amont (associé à la chambre de coupure 18) débouche sur une deuxième ouverture (ouverture amont) située sur la face intérieure 38 et décalée vers l'avant du boîtier 4 de l'appareil 2.

Ainsi, le premier dispositif de filtrage de l'appareil 2 est décalé vers l'arrière du boîtier 4, tandis que le deuxième dispositif de filtrage est décalé vers l'avant du boîtier 4.

De préférence, le premier dispositif de filtrage de l'appareil 2 occupe un volume inférieur au volume occupé par le deuxième dispositif de filtrage de l'appareil 2.

De préférence encore, le premier bloc de filtrage et le deuxième bloc de filtrage présentent des dimensions différentes, qui sont par exemple adaptées à la forme du boîtier 4 de manière à épouser la forme des faces supérieure et inférieure du boîtier de façon à réduire l'encombrement de l'appareil 2.

Grâce à l'invention, en utilisant des premier et deuxième dispositifs de filtrage de différents pour les sorties amont et aval de gaz de coupure de l'appareil, plutôt que d'utiliser deux dispositifs de filtrage identiques disposés symétriquement, on améliore sensiblement les performances de filtrage de l'appareil 2.

Notamment, cette disposition permet de réduire les fuites de gaz de coupure à l'arrière de l'appareil. Cela permet aussi de réduire le coût de fabrication des blocs de filtrage de l'appareil 2, et de réduire la masse des dispositifs de filtrage, puisque la quantité de matériau utilisée pour fabriquer le premier dispositif de filtrage et le deuxième dispositif de filtrage est optimisée au plus proche des besoins réels.

Cette optimisation porte sur le choix des matériaux, mais aussi sur les dimensionnements et la position des différents éléments constitutifs des dispositifs de filtrage, en adaptant les performances et les caractéristiques de chacun des dispositifs de filtrage aux besoins réels pour les sorties amont et aval de gaz de coupure.

Selon des exemples, un seul des filtres poreux, par exemple le filtre poreux 26, est réalisé par fabrication additive. Alternativement, les deux filtres poreux 26 et 34 sont réalisés par fabrication additive.

Avantageusement, pour chaque filtre poreux 26 ou 34 réalisé par fabrication additive, le filtre à maille tressée 24 ou 64 correspondant est lui aussi réalisé par fabrication additive, le filtre poreux et le filtre à maille tressée correspondant étant réalisés d'une seule pièce. Autrement dit, le filtre à mailles tressée 24 et le filtre 26 sont deux portions d'un même élément filtrant. Il n'y a ainsi aucun jeu d'assemblage ou aucune fuite entre le filtre poreux 26 et le filtre à mailles tressée 24 correspondant.

Avantageusement, le dispositif de filtrage en entier est réalisé par fabrication additive. Ainsi la pièce de support 22, le filtre à maille tressée 24 le filtre poreux 26 sont réalisés d'une seule pièce. Autrement dit, le dispositif de filtrage est monobloc. En particulier chaque filtre 24 et 26 relié, en périphérie, à la pièce de support 22. On évite ainsi les fuites de gaz de coupure entre, d'une part, la pièce de support 22 et, d'autre part, les filtres 24 et 26, ce qui améliore l'efficacité du dispositif de filtrage.

Avantageusement, le dispositif de filtrage réalisé par fabrication additive comprend aussi des éléments de renfort, par exemple des nervures, des piliers, etc., qui sont logés à l'intérieur de la pièce de support 22 et qui sont agencés de manière à rigidifier les filtres 24 et/ou 26, réduisant ainsi les déformations des filtres 24 et/ou 26 lors d'une coupure, et donc le risque de fuites. Les éléments de renfort ne sont pas représentés. Selon des exemples, ces éléments de renforts sont situés en amont des filtres 24 et 26, et/ou en aval des filtres 24 et 26. Alternativement, ces éléments de renfort sont intégrés aux filtres 24 et 26.

Lorsque la pièce de support 22 est réalisée par fabrication additive, d'autres éléments de fixation, par exemple sont avantageusement ménagés directement sur la pièce de support 22, pour son assemblage au reste de l'appareil électrique 2. De manière non limitative, ces éléments de fixation incluent des ergots et/ou des plots et/ou des glissières, et/ou d'épaulements, et/ou de lamages, et/ou trous débouchants ou non débouchants, et/ou taraudages, etc.

La fabrication par impression 3D permet une différenciation et une customisation du design en fonction de chaque besoin. Avantageusement, la fabrication par impression 3D de tout ou partie de chaque dispositif de filtrage permet d'optimiser la juste quantité de matière mise en oeuvre (poids pièce) et son encombrement (dimensions) en fonction des performances attendues, par exemple, en fonction des pouvoirs de coupures des appareils électriques 2 - par exemple : 45kA, 75kA, 100kA, etc. -. On réduit ainsi les coûts unitaires de chaque dispositif de filtrage. D'autre part, la réalisation des pièces de support 22 par fabrication additive permet le marquage ou une sérialisation individuelle des dispositifs de filtrage fabriqués, sans opération supplémentaire, puisque le marquage se fait conjointement à la fabrication des pièces de support.

De préférence, les procédés de fabrication additive sont des procédés de fabrication métallique sur lit de poudre. Selon des exemples non limitatifs, de tels procédés incluent :
- la fusion sélective sur lit de poudre par Laser, notamment les procédés par fusion sélective - dit aussi *Selective Laser Melting* en anglais, ou SLM - ou par frittage direct - dit aussi *Direct Métal Laser Sintering* en anglais, ou DMLS - ;
- la fusion sélective sur lit de poudre par faisceau d'électrons - dit aussi *Electron Beam Melting* an anglais, ou EBM - ;
- la projection de liant sur lit de poudre et frittage - dit aussi *Métal Binder Jetting* en anglais, ou MJB - ;
- ou leurs variantes et évolutions.

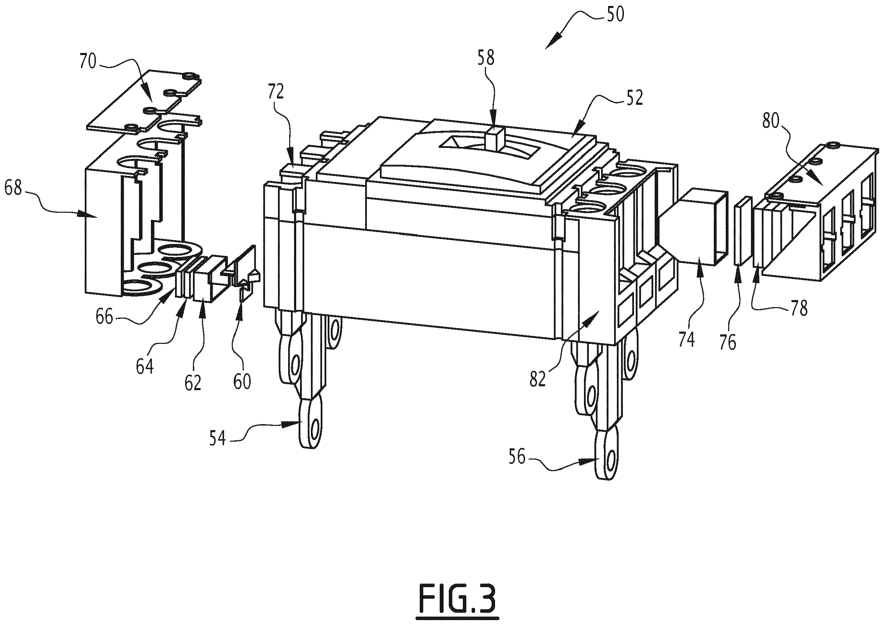

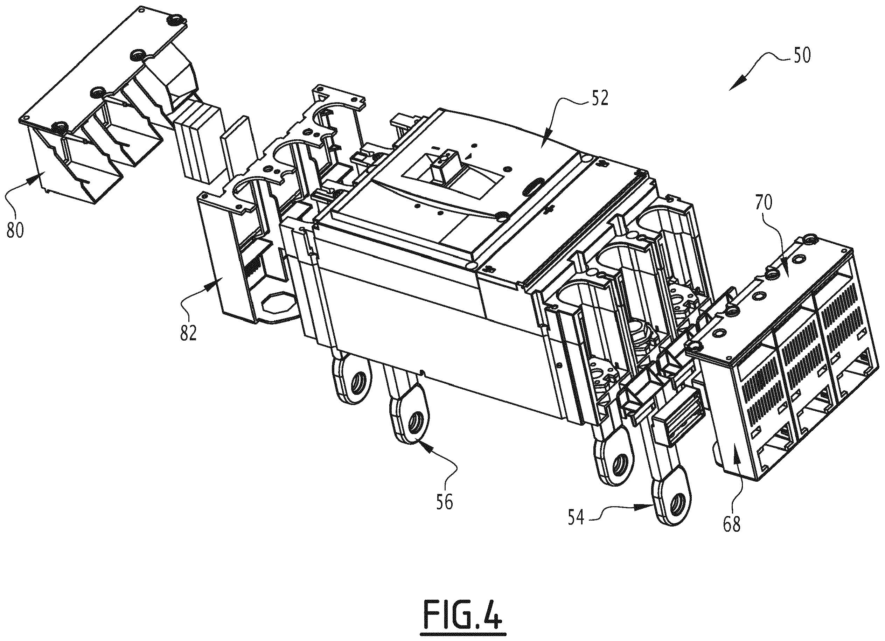

Les figures 3 et 4 représentent un deuxième mode de réalisation d'un appareil de coupure 50 à contacts électriques séparables et à coupure dans l'air pour interrompre un courant électrique. Cet appareil 50 est globalement similaire à l'appareil 2 dans son architecture et son principe de fonctionnement et n'en diffère que par certains détails de construction. Par exemple, l'appareil 50 présente un calibre en courant plus élevé que l'appareil 2. La description faite en référence à l'appareil 2 est donc en grande partie applicable à l'appareil 50.

En l'espèce, l'appareil 50 comporte un boîtier 52, par exemple en plastique moulé, à l'intérieur duquel sont logés des contacts séparables raccordés à des terminaux de connexion aval 54 et des terminaux de connexion amont 56. Un organe de commande 58, tenant le même rôle que celui de l'organe de commande 14, est présent en face avant du boîtier 52.

De la même façon que l'appareil 2, l'appareil 50 comporte des contacts séparables permettant d'interrompre un courant électrique circulant entre les terminaux 56 et 54. Pour chaque pôle de l'appareil, des chambres de coupure analogues aux chambres de coupure 16 et 18 permettent d'éteindre un arc électrique. L'appareil 50 comporte un premier dispositif de filtrage et un deuxième dispositif de filtrage, de façon analogue à l'appareil 2.

Comme illustré sur la figure 3, le premier dispositif de filtrage de l'appareil 50 comporte une pièce de maintien 60, une pièce de support 62, un filtre à maille tressée 64 et un filtre poreux métallique 66.

La pièce de support 62, le filtre à maille tressée 64 et le filtre poreux métallique 66 jouent le même rôle et présentent des caractéristiques similaires à la pièce de support 22, au filtre à maille tressée 24 et au filtre poreux métallique 26 précédemment décrits.

Comme visible sur les figures 3 et 4, ces éléments font partie d'un bloc de filtrage qui possède une armature 68 configurée pour être accrochée sur la face supérieure 72 du boîtier 52 de l'appareil 50 avec l'aide d'un couvercle 70. Les éléments sont ici placés dans l'armature 68. La pièce de maintien 60 sert ici à bloquer la pièce de support 62, le filtre à maille tressée 64 et le filtre poreux métallique 66 ans le support formé par l'armature 68.

Là encore, le bloc de filtrage (et donc l'armature 68) peut contenir plusieurs dispositifs de filtrage analogues au premier dispositif de filtrage, ces dispositifs de filtrage étant associés aux orifices de sortie de gaz aval associés aux différents pôles de l'appareil, ces orifices débouchant ici sur la face inférieure du boîtier 52.

Le deuxième dispositif de filtrage de l'appareil 50, visible sur la figure 3, comporte une deuxième pièce de support 74, un deuxième filtre à maille tressée métallique 76 et un deuxième filtre poreux métallique 78. Ces éléments ont des fonctions similaires à celles de la pièce de support 62, du filtre à maille tressée 64 et du filtre à mousse métallique 66.

Le filtre à maille tressée 76 et le filtre poreux métallique 78 sont logés à l'intérieur de la pièce de support 70, qui est placée en sortie du canal d'évacuation associé à la chambre de coupure correspondante.

Comme cela est visible sur les figures 3 et 4, la pièce de support 74 est elle-même placée dans un deuxième bloc de filtrage, qui comporte une armature configurée pour être accroché sur la face supérieure du boîtier 52 de l'appareil 50. L'armature est ici réalisée en deux parties 80 et 82.

Le deuxième bloc de filtrage (et donc l'armature associée 80, 82) peut être configuré pour accueillir plusieurs dispositifs de filtrage de l'appareil 50, associés aux chambres de coupures respectives qui sont situées du côté des deuxièmes contacts fixes (donc du côté dit « amont ») pour les différents pôles de l'appareil 50.

Selon des modes de réalisation alternatifs, la mousse métallique pourrait être formée par fabrication additive à poudre métallique, comme précédemment décrit. Les filtres 66 et 78, voire l'ensemble formé par le filtre et le diffuseur de gaz correspondant et/ou la pièce d'entrée correspondante pourraient être au moins en partie fabriqués par fabrication additive.

La deuxième pièce de support 74 présente avantageusement une forme et des dimensions différentes de celles de la première pièce de support 62 de l'appareil 50.

Par exemple, la deuxième pièce de support 74 présente une forme évasée permettant d'augmenter la section du deuxième dispositif de filtrage de l'appareil 50.

De préférence, la porosité du deuxième filtre à maille tressée 76 est proche de ou identique à la porosité du premier filtre à maille tressée 64 de l'appareil 50.

De préférence, à l'instar de ce qui a été décrit en référence à l'appareil 2, le volume de mousse utilisée pour le deuxième filtre poreux métallique 78 de l'appareil 50 est supérieur au volume de mousse utilisé pour le premier filtre poreux 66 de l'appareil 50.

Notamment, la quantité de mousse utilisée pour le deuxième filtre 78 de l'appareil 50 est supérieure à la quantité de mousse utilisée pour le premier filtre 66 de l'appareil 50.

Avantageusement, pour une puissance électrique donnée admise par l'appareil 50, le volume de mousse pour chaque filtre poreux métallique 66 ou 78 est choisi en fonction du débit maximal de gaz admis par la sortie de gaz (ici donné par la section de sortie équivalente de l'ouverture ou du canal d'évacuation correspondant).

Les règles de conception des filtres, et notamment les intervalles de valeurs décrites pour les filtres poreux 26 et 36 de l'appareil 2 peuvent être utilisées par homothétie pour l'appareil 50.

De préférence, les sections d'entrée respectives du premier dispositif de filtrage et du deuxième dispositif de filtrage de l'appareil 50 sont dimensionnées en fonction des sections des canaux d'évacuation amont et aval des gaz de coupure.

Par exemple, la section du canal d'évacuation aval 20 (celui associé à la première chambre de coupure 16) est inférieure à la section du canal d'évacuation amont (celui associé à la deuxième chambre de coupure 18).

De préférence, le premier dispositif de filtrage et le deuxième dispositif de filtrage sont disposés différemment dans l'appareil 50, de façon non symétrique. Par exemple, comme illustré sur la figure 3, le premier dispositif de filtrage de l'appareil 50 est décalé vers l'arrière du boîtier 52, tandis que le deuxième dispositif de filtrage est décalé vers l'avant du boîtier 52.

De préférence, le premier dispositif de filtrage de l'appareil 52 occupe un volume inférieur au volume occupé par le deuxième dispositif de filtrage de l'appareil 50.

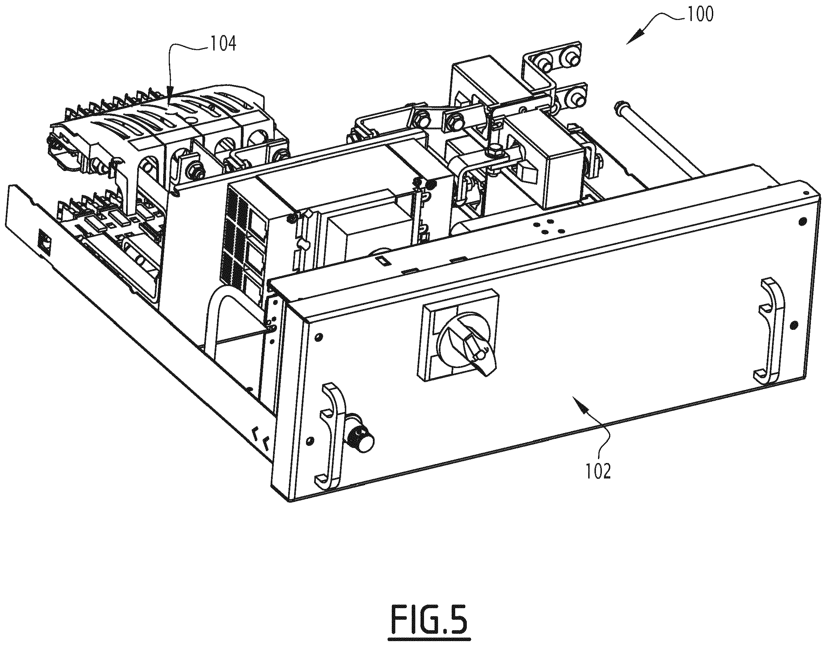

La figure 5 représente un exemple d'un tiroir amovible 100 comportant une armature 102 et un appareil de coupure 104 fixé sur l'armature. Le tiroir 100 est, par exemple, destiné à être inséré dans une armoire électrique. L'appareil 104 est par exemple l'appareil 2 ou l'appareil 50.

De façon avantageuse, la forme et l'agencement des blocs de filtrage permet de donner réduire l'encombrement de l'appareil 2 ou 50, ce qui facilite l'insertion de cet appareil dans le tiroir 100.

Cela permet également de simplifier la conception du tiroir 100.

Par exemple, grâce aux performances accrues des premier et deuxième dispositifs de filtrage, les fuites de gaz de coupure sont réduites et les gaz de coupure sont mieux filtrés et mieux refroidis, ce qui, ce qui permet de supprimer ou de réduire certaines pièces qui jusqu'alors étaient utilisées dans les tiroirs, tels que des pièces de renfort visant à renforcer mécaniquement les tiroirs pour supporter la surpression due aux fuites de gaz.

De plus, comme les fuites de gaz sont réduites, le risque d'amorçage électrique au niveau de barres électriquement conductrices situées en arrière du tiroir s'en trouve réduit, ce qui permet, dans de nombreux cas, de réduire l'isolation de ces barres conductrices, ce qui procure un gain de place et une économie de matière.

Au final, à volume égal, la densité d'appareils de coupure peut être augmentée dans chaque tiroirs. De même la densité de tiroirs comportant de tels appareils de coupure peut être augmentée dans une installation électrique (telle qu'une armoire électrique) accueillant ces tiroirs.

Les modes de réalisation et les variantes envisagés ci-dessus peuvent être combinés entre eux pour construire de nouveaux modes de réalisation.

## Revendications

1. Appareil électrique de coupure à contacts séparables (2, 50) configuré pour interrompre un courant électrique, l'appareil électrique comportant une première chambre de coupure (16) d'arc électrique associée à un premier dispositif de filtrage de gaz de coupure et une deuxième chambre de coupure d'arc électrique (18) associée à un deuxième dispositif de filtrage de gaz de coupure, le premier dispositif de filtrage et le deuxième dispositif de filtrage étant disposés sur des faces opposées du boîtier de l'appareil électrique, dans lequel le premier dispositif de filtrage comporte une première pièce de support (22 ; 62), un premier filtre à maille tressée métallique (24 ; 64) et un premier filtre poreux métallique (26 ; 66), dans lequel le deuxième dispositif de filtrage comporte une deuxième pièce de support (30 ; 74), un deuxième filtre à maille tressée métallique (32 ; 76) et un deuxième filtre poreux métallique (34 ; 78), dans lequel section d'entrée de gaz du premier dispositif de filtrage est inférieure à la section d'entrée de gaz du deuxième dispositif de filtrage, dans lequel le premier filtre poreux (26 ; 66) et le deuxième filtre poreux (34 ; 74) comportent chacun une mousse métallique, la porosité du deuxième filtre proche ou identique de la porosité du premier filtre de l'appareil, dans lequel le volume de mousse utilisé pour le deuxième filtre poreux (34 ; 74) est supérieur au volume de mousse utilisé pour le premier filtre poreux (26 ; 66), et dans lequel le volume de mousse par filtre exprimé en cm3 par mégawatt de puissance est compris entre 0,3 et 0,5 pour le deuxième filtre poreux (34 ; 74) et entre 0,15 et 0,25 pour le premier filtre poreux (26 ; 66).

2. Appareil électrique (2, 50) selon la revendication précédente, dans lequel le premier dispositif de filtrage et le deuxième dispositif de filtrage sont disposés différemment dans l'appareil, de façon non symétrique.

3. Appareil électrique (2, 50) selon l'une quelconque des revendications précédentes, dans lequel le premier dispositif de filtrage de l'appareil est placé sur une face inférieure du boîtier de l'appareil en étant décalé vers l'arrière du boîtier, et dans lequel que le deuxième dispositif de filtrage est placé sur une face supérieure du boîtier en étant décalé vers l'avant du boîtier.

4. Appareil électrique (2, 50) selon l'une quelconque des revendications précédentes, dans lequel le premier dispositif de filtrage occupe un volume inférieur au volume occupé par le deuxième dispositif de filtrage.

5. Appareil électrique (2, 50) selon l'une quelconque des revendications précédentes, dans lequel le premier dispositif de filtrage est placé dans un premier bloc de filtrage associé à la face inférieure du boîtier de l'appareil, et dans lequel le deuxième dispositif de filtrage est placé dans un deuxième bloc de filtrage associé à la face supérieure du boîtier de l'appareil, le premier bloc de filtrage et le deuxième bloc de filtrage présentant des dimensions différentes.

6. Appareil électrique (2, 50) selon l'une quelconque des revendications précédentes, dans lequel au moins un des filtres poreux, choisi parmi le premier filtre poreux (26 ; 66) et le deuxième filtre poreux (34 ; 78), est réalisé par fabrication additive.

7. Appareil électrique (2, 50) selon la revendication précédente, dans lequel le au moins un filtre poreux (26, 34 ; 66,78) fabriqué par fabrication additive est réalisé d'une seule pièce avec le filtre à maille tressée métallique (24 ; 64) correspondant.

8. Appareil électrique (2, 50) selon l'une quelconque des revendications 6 ou 7, dans lequel le au moins un filtre poreux (26, 34 ; 66, 78) fabriqué par fabrication additive est réalisé d'une seule pièce avec le filtre à maille tressée métallique (24 ; 64) et avec la pièce de support (22 ; 62) correspondants.

9. Appareil électrique (2, 50) selon la revendication précédente, dans lequel le dispositif de filtrage comprend aussi des éléments de renfort, par exemple des nervures et/ou des piliers, qui sont ménagés à l'intérieur de la pièce de support (22 ; 62) et qui sont configurés pour rigidifier les filtres poreux (26, 34 ; 66, 78) et/ou les filtres à maille tressée métallique (24 ; 64).

10. Appareil électrique (2, 50) selon l'une quelconque des revendications précédentes, dans lequel au moins une des pièces de support (22 ; 66) est réalisé par fabrication additive, la au moins une pièce de support (22 ; 62) intégrant des éléments de fixation, qui sont configurés pour l'assemblage de cette pièce de support au reste de l'appareil électrique.

11. Tiroir amovible (100) pour une armoire électrique, le tiroir amovible comportant une armature (102) et un appareil de coupure (104) fixé sur l'armature, l'appareil de coupure étant selon l'une quelconque des revendications précédentes.

## Patentansprüche

1. Elektrisches Schaltgerät mit trennbaren Kontakten (2, 50), das konfiguriert ist, um einen elektrischen Strom zu unterbrechen, das elektrische Gerät umfassend eine erste Lichtbogenlöschkammer (16), die mit einer ersten Schaltgasfiltervorrichtung assoziiert ist, und eine zweite Lichtbogenlöschkammer (18), die mit einer zweiten Schaltgasfiltereinrichtung assoziiert ist, wobei die erste Filtervorrichtung und die zweite Filtervorrichtung au gegenüberliegenden Seiten des Gehäuses des elektrischen Geräts angeordnet sind, wobei die erste Filtervorrichtung ein erstes Halterungsteil (22; 62) umfasst, einen ersten Metallgeflechtfilter (24; 64) und einen ersten porösen Metallfilter (26; 66), wobei die zweite Filtervorrichtung ein zweites Halterungsteil (30; 74), einen zweiten Metallgeflechtfilter (32; 76) und einen zweiten porösen Metallfilter (34; 78) umfasst, wobei der Gaseinlassquerschnitt der ersten Filtervorrichtung kleiner ist als der Gaseinlassquerschnitt der zweiten Filtervorrichtung, wobei der erste poröse Filter (26; 66) und der zweite poröse Filter (34; 74) jeweils einen Metallschaum umfassen, wobei die Porosität des zweiten Filters nahe bei der oder gleich wie die Porosität des ersten Filters der Vorrichtung ist, wobei das Volumen des für den zweiten porösen Filter (34; 74) verwendeten Schaums größer ist als das Volumen des für den ersten porösen Filter (26; 66) verwendeten Schaums, und wobei das Schaumvolumen pro Filter, ausgedrückt in cm³ pro Megawatt Leistung, zwischen 0,3 und 0,5 für den zweiten porösen Filter (34; 74) und zwischen 0,15 und 0,25 für den ersten porösen Filter (26; 66) ist.

2. Elektrisches Gerät (2, 50) nach dem vorherigen Anspruch, wobei die erste Filtervorrichtung und die zweite Filtervorrichtung in dem Gerät unterschiedlich und nicht symmetrisch angeordnet sind.

3. Elektrisches Gerät (2, 50) nach einem der vorherigen Ansprüche, wobei die erste Filtervorrichtung des Geräts auf einer Unterseite des Gehäuses des Geräts angeordnet ist, indem sie zu der Rückseite des Gehäuses hin versetzt ist, und wobei die zweite Filtervorrichtung auf einer Oberseite des Gehäuses angeordnet ist, indem sie zu der Vorderseite des Gehäuses hin versetzt ist.

4. Elektrisches Gerät (2, 50) nach einem der vorherigen Ansprüche, wobei die erste Filtervorrichtung ein geringeres Volumen einnimmt als das Volumen, das von der zweiten Filtervorrichtung eingenommen wird.

5. Elektrisches Gerät (2, 50) nach einem der vorherigen Ansprüche, wobei die erste Filtereinrichtung in einem ersten Filterblock angeordnet ist, der mit der Unterseite des Gerätegehäuses assoziiert ist, und wobei die zweite Filtereinrichtung in einem zweiten Filterblock platziert ist, der mit der Oberseite des Gerätegehäuses assoziiert ist, wobei der erste Filterblock und der zweite Filterblock unterschiedliche Abmessungen aufweisen.

6. Elektrisches Gerät (2, 50) nach einem der vorherigen Ansprüche, wobei mindestens einer der porösen Filter, der ausgewählt ist aus dem ersten porösen Filter (26; 66) und dem zweiten porösen Filter (34; 78), durch additive Fertigung gefertigt wird.

7. Elektrisches Gerät (2, 50) nach dem vorherigen Anspruch, wobei der mindestens eine poröse Filter (26, 34; 66, 78), der durch additive Fertigung gefertigt wird, einstückig mit dem entsprechenden Metallgeflechtfilter (24; 64) gefertigt ist.

8. Elektrisches Gerät (2, 50) nach einem der Ansprüche 6 oder 7, wobei der mindestens eine durch additive Fertigung gefertigte poröse Filter (26, 34; 66, 78) einstückig mit dem entsprechenden Metallgeflechtfilter (24; 64) und dem Halterungsteil (22; 62) gefertigt ist.

9. Elektrisches Gerät (2, 50) nach dem vorherigen Anspruch, wobei die Filtervorrichtung auch Verstärkungselemente, z. B. Rippen und/oder Säulen, umfasst, die im Inneren des Halterungsteils (22; 62) ausgebildet sind und die konfiguriert sind, um die porösen Filter (26, 34; 66, 78) und/oder die Metallgeflechtfilter (24; 64) zu versteifen.

10. Elektrisches Gerät (2, 50) nach einem der vorherigen Ansprüche, wobei mindestens eines der Halterungsteile (22; 66) durch additive Fertigung gefertigt wird, wobei das mindestens eine Halterungsteil (22; 62) Befestigungselemente integriert, die zum Verbinden dieses Halterungsteils mit dem Rest des elektrischen Geräts konfiguriert sind.

11. Abnehmbarer Einschub (100) für einen Schaltschrank, der abnehmbare Einschub umfassend ein Gestell (102) und ein an dem Gestell befestigtes Schaltgerät (104), wobei das Schaltgerät nach einem der vorherigen Ansprüche ist.

## Claims

1. An electrical breaking appliance with separable contacts (2, 50) configured to interrupt an electric current, the electrical appliance having a first electric arc breaking chamber (16) associated with a first switching gas filtering device and a second electric arc breaking chamber (18) associated with a second switching gas filtering device, the first filtering device and the second filtering device being arranged on opposite faces of the casing of the electrical appliance, wherein the first filtering device has a first support part (22; 62), a first metallic braided mesh filter (24; 64) and a first metallic porous filter (26; 66), wherein the second filtering device has a second support part (30; 74), a second metallic braided mesh filter (32; 76) and a second metallic porous filter (34; 78), wherein the gas inlet section of the first filtering device is smaller than the gas inlet section of the second filtering device, wherein the first porous filter (26; 66) and the second porous filter (34; 74) each have a metallic foam, the porosity of the second filter close to or identical to the porosity of the first filter of the appliance, wherein the volume of foam used for the second porous filter (34; 74) is greater than the volume of foam used for the first porous filter (26; 66), and wherein the volume of foam per filter expressed in cm3 per megawatt of power is between 0.3 and 0.5 for the second porous filter (34; 74) and between 0.15 and 0.25 for the first porous filter (26; 66).

2. The electrical appliance (2, 50) according to the preceding claim, wherein the first filtering device and the second filtering device are arranged differently in the appliance, in a non-symmetrical manner.

3. The electrical appliance (2, 50) according to any one of the preceding claims, wherein the first filtering device of the appliance is located on a lower face of the casing of the appliance offset to the rear of the casing, and wherein the second filtering device is placed on an upper face of the casing offset to the front of the casing.

4. The electrical appliance (2, 50) according to any one of the preceding claims, wherein the first filtering device occupies a volume smaller than the volume occupied by the second filtering device.

5. The electrical appliance (2, 50) according to any one of the preceding claims, wherein the first filtering device is placed in a first filter block associated with the lower face of the casing of the appliance, and wherein the second filtering device is placed in a second filter block associated with the upper face of the casing of the device, the first filter block and the second filter block having different dimensions.

6. The electrical appliance (2, 50) according to any one of the preceding claims, wherein at least one of the porous filters, selected from the first porous filter (26; 66) and the second porous filter (34; 78), is made by additive manufacturing.

7. The electrical appliance (2, 50) according to the preceding claim, wherein the at least one porous filter (26, 34; 66, 78) manufactured by additive manufacturing is made in one piece with the corresponding metallic braided mesh filter (24; 64).

8. The electrical appliance (2, 50) according to any one of claims 6 or 7, wherein the at least one porous filter (26, 34; 66, 78) manufactured by additive manufacturing is made in one piece with the corresponding metallic braided mesh filter (24; 64) and the corresponding support part (22; 62).

9. The electrical appliance (2, 50) according to the preceding claim, wherein the filtering device also comprises reinforcing elements, for example ribs and/or pillars, which are made inside the support part (22; 62) and which are configured to stiffen the porous filters (26, 34; 66, 78) and/or metallic braided mesh filters (24; 64).

10. The electrical appliance (2, 50) according to any one of the preceding claims, wherein at least one of the support parts (22; 66) is produced by additive manufacturing, the at least one support part (22; 62) incorporating attachment elements, which are configured for the assembly of this support part to the rest of the electrical appliance.

11. A removable drawer (100) for an electrical cabinet, the removable drawer comprising a frame (102) and a switching appliance (104) attached to the frame, the switching appliance being according to any one of the preceding claims.
